# EUROPEAN PATENT SPECIFICATION

(11) **EP 2 001 153 B1**
(45) Date of publication and mention of the grant of the patent: **14.01.2015**
(21) Application number: 07290716.5
(22) Date of filing: 08.06.2007
(51) Int. Cl.: H04L 1/00, H04L 5/00, H04B 17/00

(54) **Autonomous impulse noise mitigation in communication systems**
Autonome Unterdrückung impulsiver Störungen in Nachrichtenübertragungssystemen
Réduction du bruit d'impulsion autonome dans des systèmes de communication

(43) Date of publication of application: 10.12.2008
(73) Proprietor: ALCATEL LUCENT, 92100 Boulogne-Billancourt (FR)
(72) Inventor: Defoort, Frank Cyriel Michel, 9150 Kruibeke-Bazel (BE); Fossion, Marc, 5140 Ligny (BE); Van Acker, Katleen, 2600 Berchem (BE); Ysebaert, Geert Bert Maarten, 3020 Winksele (Herent) (BE)
(74) Representative: Anderlini, Alain

(56) References cited:
- WO-A-2005/086405
- MOULIN F ET AL: "Discrete-multitone-based ADSL and VDSL systems performance analysis in an impulse noise environment - Advances in communication cables technology" IEE PROCEEDINGS: SCIENCE, MEASUREMENT AND TECHNOLOGY, vol. 150, no. 6, 3 November 2003 (2003-11-03), pages 273-278, XP006024286 IEE, STEVENAGE, HERTS, GB ISSN: 1350-2344
- TOUMPAKARIS D ET AL: "A square distance-based byte-erasure method for reduced-delay protection of DSL systems from non-stationary interference" GLOBECOM'03 - IEEE GLOBAL TELECOMMUNICATIONS CONFERENCE. CONFERENCE PROCEEDINGS, vol. 7 OF 7, 1 December 2003 (2003-12-01), - 5 December 2003 (2003-12-05) pages 2114-2119, XP010677730 NY, US ISBN: 0-7803-7974-8

## Description

The invention relates to a communication system as defined in claim 1 and further detailed in claims 2-7.

Examples of the first device claimed in claim 1 are network devices, such as a Digital subscriber Line Access Multiplexer (DSLAM), and examples of such a second device are customer premises devices, such as a Digital subscriber Line (DSL) modem, or vice versa. The exchanging of signals may be done wiredly, e.g. over a twisted copper pair, or wirelessly.

A particular prior art communication system is known from US 6,922,444, which discloses a system and a method for adaptive rate selection.

The disclosed communication system comprises first and second devices exchanging signals via one or more wired and/or wireless couplings and comprising processing parts for processing signals. As shown in Fig. 3 of US 6,922,444, a signal processor may for example comprise an interleaver and a processor for performing this processing.

An amount of an Impulse Noise Protection (INP) is calculated as a function of a delay selected by a user and a number of redundant (or parity) bytes, and a maximum size of a code word, as given by Equation 1 of US 6,922,444. This is a relatively rough way for determining an amount of INP.

International patent Application WO 2005/086405, claiming priority of US 60/555,982 and US 60/549,804, discloses a further improvement whereby information regarding impulse noise events, such as the length of the impulse noise events, repetition period and timing of the events, are collected at the receiver and are used for adaptively determining a suitable amount of INP, which is eventually to be translated into an interleaving depth and an amount of Forward Error correction (FEC) overhead to be configured at both the receiver and the transmitter.

The known communication system is disadvantageous owing to the fact that either
- downstream impulse noise measurements shall be transferred from customer Premises (CP) to central office (CO) for further processing (at co side or at a further centralized location), and ultimately for the determination of a suitable amount of INP,
- or that the appropriate amount of INP in downstream direction shall be directly determined by the customer premises device and passed to the co side for re-initializing the communication path,
both solutions requiring the definition and further standardization of a new interface between the communication devices, as well as the implementation of the corresponding functions in the communication devices, which clearly is not compatible with the already installed base of customer premises devices.

It is an object of the invention, inter alia, to provide a communication system that achieves a similar level of performance as the known system, and that remains compatible with the installed base of customer premises devices.

A communication system according to the invention further comprises an extrapolating part for determining characteristics of impulse noise affecting signals transmitted over said transmission medium to said second device based on measured impulse noise characteristics determined by said impulse noise measuring part,
and an adjusting part for issuing adjustment signals destined for said first and second processing parts for adjusting their processing based on extrapolated impulse noise characteristics determined by said extrapolating part.

The measurement of impulse noise events might comprise a measurement of one or more impulse noise characteristics, such as impulse noise length, amplitude (or strength), inter-arrival time, time-of-day of occurrence, impulse noise power spectral density, etc, without excluding further measurements.

Impulse noise measurements may be merged in a statistical representation to characterize the impulse noise more accurately. For example, the measured impulse noise characteristics can be expressed in terms of means (and possibly variance), or in terms of histograms representing the relative or absolute amount of impulse noises measured during fixed time interval, and characterized by certain impulse noise duration, inter-arrival time, time-of-day occurrence, impulse noise frequency characteristics, impulse noise energy.

Alternatively, impulse noise measurements can be compiled as a log file indicating which data symbols are affected and which are not (e.g., by means of a binary map).

By extrapolating then the impulse noise characteristics that have been measured over the transmission medium in one direction of communication to the impulse noise that affects signals transmitted in the opposite direction of communication, one can achieve a higher degree of operational autonomy since downstream impulse noise measurements that are available at the CP side need no longer be transmitted to the co side for further processing, and because the CO side has the authoritative role with today customer devices of enforcing new communication parameters that ultimately determine the amount of INP, without requiring any upwards compatibility with the present invention (e.g., by only re-initializing the communication path).

A communication system according to the invention is further advantageous in that the adjustment signals are generated in dependence of impulse noise measurements, and in that impulse noise measurements can be repeated to dynamically fit to new impulse noise environments that a customer may undergo.

A preferred embodiment of a communication system according to the invention is characterized in that signals transmitted from said first device to said second device over said transmission medium and signals transmitted from said second device to said first device over said transmission medium are multi-carrier signals and make use of disjoint and interleaved frequency bands.

This embodiment is particularly advantageous in that extrapolation over the frequency domain is more reliable for multi-carrier communication systems and thus lead to better performances, and finally to a better quality of experience (e.g., less visual artifacts and/or more user data rate). This embodiments will find application in e.g. very high speed Digital subscriber Line (VDSL) system, wherein many downstream and upstream communication bands are disjointly interleaved.

A preferred embodiment of a communication system according to the invention is characterized in that the first and second processing parts comprise interleaving parts and/or forward error correction coding parts, and in that the adjustment signals comprise a minimum impulse noise protection and/or a maximum signal delay and/or a coding parameter (interleaving and/or FEC parameter).

The adjustment signal might as well adjust a bit loading and/or a artificial/virtual noise and/or a noise margin, without excluding further parameters.

A preferred embodiment of a communication system according to the invention is characterized in that the first and second processing parts are adjusted by the adjustment signals at initialization and/or on the fly.

For example, after the device activation but before the exchange of user data, the adjustment takes place based on impulse noise measurements during initialization or on a stored history of the impulse noise statistics or on both. Alternatively, the adjustment can be done on the fly and takes place while user data are being exchanged (provided the communication protocol supports some on-line path reconfiguration feature).

A preferred embodiment of a communication system according to the invention is characterized in that the impulse noise measuring part comprises an erasure detector or a noise detector or an increase in viterbi output metric detector.

Examples of such a noise detector are a noise energy detector, a noise clipping detector, etc. These are technologies for detecting an impulse noise event that have proven to function well. Alternatively, a cyclic redundancy check on units of data, the length of which is shorter than the typical impulse noise length, could be used to detect the presence of impulse noise. This alternative embodiment has also proven to function well.

A preferred embodiment of a communication system according to the invention is characterized in that said extrapolating and adjusting parts form part of a third device coupled to the first device.

such a third device is for example a network analyzer or a network manager which is to be coupled via a communication network to a network device that exchanges signals with a customer premises device.

A preferred embodiment of a communication system according to the invention is characterized in that said extrapolating and adjusting parts form part of said first device.

The invention also relates to a device according to claim 8.

The invention also relates to a method according to claim 9.

The invention also relates to a computer program product for performing the steps of the method according to the invention.

The invention also relates to a medium for storing the computer program product according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

These and other aspects of the invention, which is defined by the scope of appended claims 1-11, will be apparent from and elucidated with reference to the embodiments described hereinafter.
Fig. 1 shows diagrammatically a communication system according to the invention comprising a first device and a second device,
Fig. 2 shows diagrammatically a communication system according to the invention comprising a first device, a second device and a third device.

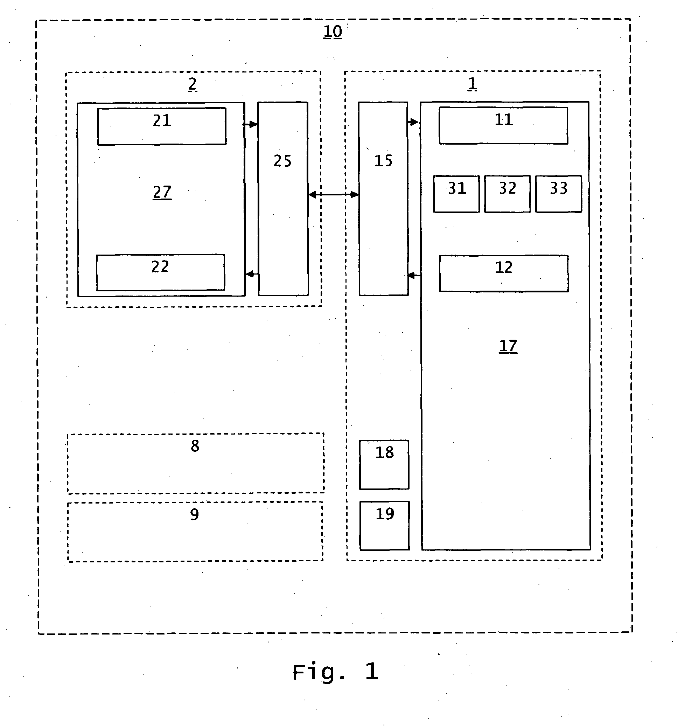

The communication system 10 according to the invention shown in Fig. 1 comprises a first device 1 and a second device 2.

The first device 1 comprises a transceiver 15 coupled to a processor 17. The processor 17 comprises a first processing part 11 for adjustably processing signals received from the second device 2 and a further first processing part 12 for adjustably processing signals to be transmitted to the second device 2.

The second device 2 comprises a processor 27 coupled to a transceiver 25 that is coupled via one or more wired and/or wireless links to the transceiver 15. The processor 27 comprises a second processing part 21 for adjustably processing signals to be transmitted to the first device 1 and a further second processing part 22 for adjustably processing signals received from the first device 1.

The communication system 10 may further comprise a further device 8 and/or 9 coupled to a further transceiver 18 and/or 19 of the first device 1, without excluding yet further devices and yet further transceivers not shown.

The first device is for example a DSLAM, or a wireless station, and the second device is for example a DSL gateway/router/modem/bridge or a wireless terminal.

The processor 17 further comprises an impulse noise measuring part 31 for measuring impulse noise characteristics in signals received from the second device 2 and an extrapolating part 32 for determining characteristics of impulse noise affecting signals transmitted to the second device 2 based on impulse noise characteristics as measured by the measuring part 31 and an adjusting part 33 for issuing adjustment signals destined for the processing parts 12 and 22 for adjusting their processing based on extrapolated impulse noise characteristics as determined by the extrapolating part 32.

The processing parts 12, 22 for example comprise interleaving parts and/or forward error correction adding parts and the adjustment signals for example comprise a minimum impulse noise protection and/or a maximum signal delay and/or a coding parameter.

Alternatively the first and second processing parts 11,21 can comprise de-mapper/mapper parts and the adjustment signals comprise a specific bit loading and/or a specific amount of artificial/virtual noise.

The adjustment signals originating from the adjusting part 33 might be supplied to the processing part 22 via one or more wired and/or wireless links that at least partly coincide with the one or more links between the transceivers 15 and 25, or that do not coincide with the transceiver links.

The processing parts 12, 22 are adjusted by the adjustment signals at initialization or on the fly.

The impulse noise measuring part 31 is arranged to measure characteristics of impulse noise in signals received from the second device 2, and for example comprises an erasure detector or a noise detector.

For example, impulse noise measurements comprises impulse noise length, amplitude (or strength), inter-arrival time, time-of-day of occurrence, impulse noise power spectral density. Impulse noise measurements may be further compared and/or combined in a statistical representation with each other (possibly in a weighted way) or otherwise manipulated to further improve the system.

The extrapolating part 32 is arranged to extrapolate the characteristics of impulse noise measured by the measuring part 31 in signals transmitted in one direction of communication, presently from the second device 2 to the first device 1, to characteristics of impulse noise that affects signals transmitted in the opposite direction of communication, presently from the first device 1 to the second device 2.

For example, the length and/or inter-arrival time and/or time-of-day of occurrence of impulse noise can be assumed to be identical in both directions of communication, while the power spectral density of impulse noise can be determined by means of linear or polynomial interpolation between disjoint communication bands, or by finding out, among pre-determined impulse noise templates, the closest match with the measured impulse noise, or by finding out, based on loop characteristics, how impulse noise measured on one side of the link will affect the other side of the link.

It is to be noticed that the characteristics of impulse noise measured by the measuring part 31 in signals transmitted in one direction of communication on a given subscriber line may be extrapolated to characteristics of impulse noise that affects signals transmitted in the opposite direction on another subscriber line in the same binder.

The adjusting part 33 is arranged to issue adjustment signals destined for the processing parts 12, 22 for adjusting their processing. The adjustment signals are based on the extrapolated characteristics of impulse noise as determined by the extrapolating part 32 and provide a suitable amount of INP to protect against the so-estimated impulse noise.

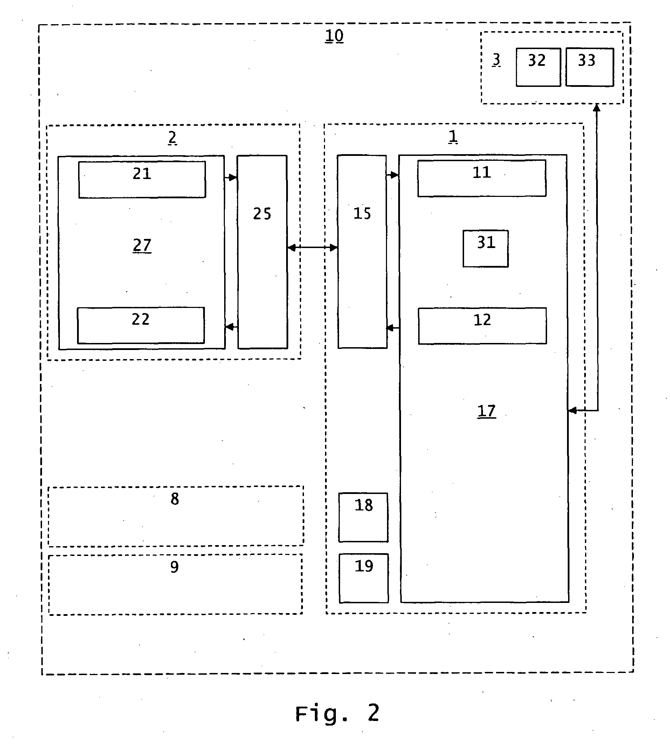

The communication system 10 according to a preferred embodiment shown in Fig. 2 corresponds with the one shown in Fig. 1 apart from the fact that the extrapolating part 32 and the adjusting part 33 have been shifted out of the processor 17 and into a third device 3 coupled to the first device 1, such as a network analyzer or a network manager.

The second device 2 may also implement a noise measuring part, an extrapolating part and an adjusting part for issuing adjustment signals for the processing part 11 and 21.

In Fig. 1 and 2, each part shown may be divided into sub-parts, and any two or more parts may be integrated into a new and larger part. Any part shown may comprise hardware and/or software. The processors 17 and 27 are just examples of processing blocks that can be of any hardware and/or software architecture. The transceivers 15 and 25 for example comprise transmitters and receivers that are to be coupled to the processors and for example further comprise hybrids coupled at one side to the transmitters and receivers and to be coupled at the other side to one or more links. The computer program product according to the invention may be stored on and/or comprise a fixed medium such as a processor memory of a processor or a removable medium.

## Claims

1. **A communication system** (10) comprising **a first device** (1) and **a second device** (2) exchanging signals over **a transmission medium,** said first device comprising **a first processing part** (12) for processing signals to be transmitted over said transmission medium to said second device, and said second device comprising **a second processing part** (22) for processing signals received through said transmission medium from said first device,
said first device comprising **an impulse noise measuring part** (31) for measuring characteristics of impulse noise affecting signals received through said transmission medium from said second device,
***characterized in that*** said communication system further comprises **an extrapolating part** (32) for determining characteristics of impulse noise affecting signals transmitted over said transmission medium to said second device based on **measured impulse noise characteristics** determined by said impulse noise measuring part,
and **an adjusting part** (33) for issuing **adjustment signals** destined for said first and second processing parts for adjusting their processing based on **extrapolated impulse noise characteristics** determined by said extrapolating part.

2. **A communication system** (10) as defined in claim 1, ***characterized in that*** signals transmitted from said first device to said second device over said transmission medium and signals transmitted from said second device to said first device over said transmission medium are multi-carrier signals and make use of disjoint and interleaved frequency bands.

3. **A communication system** (10) as defined in any of the preceding claims, ***characterized in that*** said first and second processing parts comprise interleaving parts or forward error correction coding parts,
*and **in that*** said adjustment signals comprise a minimum impulse noise protection or a maximum signal delay or a coding parameter.

4. **A communication system** (10) as defined in any of the preceding claims, ***characterized in that*** said first and second processing parts are adjusted by said adjustment signals at initialization or on the fly.

5. **A communication system** (10) as defined in any of the preceding claims, ***characterized in that*** said impulse noise measuring part comprises an erasure detector or an increase in noise energy detector or an increase in viterbi output metric detector.

6. **A communication system** (10) as defined in any of the preceding claims, ***characterized in that*** said extrapolating and adjusting parts form part of **a third device** (3) coupled to said first device.

7. **A communication system** (10) as defined in claim 1, 2, 3, 4 or 5, ***characterized in that*** said extrapolating and adjusting parts form part of said first device.

8. The **first device** (1) of the communication system as defined in claim 7.

9. **A method** for use in a communication system comprising **a** first **device** (1) and **a second device** (2) exchanging signals over a **transmission medium,** said first device comprising **a first processing part** (12) for processing signals to be transmitted over said transmission medium to said second device and said second device comprising **a second processing part** (22) for processing signals received through said transmission medium from said first device,
said method comprising a first step of, at the first device, measuring characteristics of impulse noise affecting signals received through said transmission medium from said second device,
***characterized in that** the* method further comprises a second step of determining characteristics of impulse noise affecting signals transmitted over said transmission medium to said second device based on **measured impulse noise characteristics** determined by the first step,
and a third step of issuing **adjustment signals** destined for said first and second processing parts for adjusting their processing based on **extrapolated impulse noise characteristics** determined by the second step.

10. **A computer program product** for performing the steps of the method of claim 9.

11. **A medium** for storing the computer program product of claim 10.

## Patentansprüche

1. **Kommunikationssystem** (10), umfassend **eine erste Vorrichtung** (1) und **eine zweite Vorrichtung** (2), welche über **ein Übertragungsmedium** Signale austauschen, wobei die besagte erste Vorrichtung **einen ersten Verarbeitungsteil** (12) für die Verarbeitung von über das besagte Übertragungsmedium an die besagte zweite Vorrichtung zu übertragenden Signalen umfasst, und wobei die besagte zweite Vorrichtung **einen zweiten Verarbeitungsteil** (22) für die Verarbeitung von über das besagte Übertragungsmedium von der besagten ersten Vorrichtung empfangenen Signalen umfasst,
wobei die besagte erste Vorrichtung **einen Störimpuls-Messteil** (31) zum Messen der Eigenschaften von Störimpulsen, welche über das besagte Übertragungsmedium von der besagten zweiten Vorrichtung empfangene Signale beeinträchtigen, umfasst,
***dadurch gekennzeichnet, dass*** das besagte Kommunikationssystem weiterhin **einen Extrapolationsteil** (32) zur Ermittlung, auf der Basis der durch den besagten Störimpuls-Messteil ermittelten **gemessenen Störimpulseigenschaften,** der Eigenschaften der Störimpulse, welche über das besagte Übertragungsmedium an die besagte zweite Vorrichtung übertragene Signale beeinträchtigen,
und **einen Anpassungsteil** (33) zum Ausgeben von für den besagten ersten und den besagten zweiten Verarbeitungsteil bestimmten **Anpassungssignalen,** um deren Verarbeitung auf der Basis von durch den besagten Extrapolationsteil ermittelten **extrapolierten Störimpuls-Eigenschaften** anzupassen,
umfasst.

2. **Kommunikationssystem** (10) nach Anspruch 1, ***dadurch gekennzeichnet, dass*** die von der besagten ersten Vorrichtung über das besagte Übertragungsmedium an die besagte zweite Vorrichtung übertragenen Signale und die von der besagten zweiten Vorrichtung über das besagte Übertragungsmedium an die besagte erste Vorrichtung übertragenen Signale Mehrträgersignale sind und disjunkte und verschachtelte Frequenzbänder benutzen.

3. **Kommunikationssystem** (10) nach einem beliebigen der vorstehenden Ansprüche, ***dadurch gekennzeichnet, dass*** der besagte erste und der besagte zweite Verarbeitungsteil Verschachtelungsteile oder Vorwärtsfehlerkorrektur-Codierungsteile umfassen, *und dass* die besagten Anpassungssignale einen minimalen Störimpulsschutz oder eine maximale Signalverzögerung oder einen Codierungsparameter umfassen.

4. **Kommunikationssystem** (10) nach einem beliebigen der vorstehenden Ansprüche, ***dadurch gekennzeichnet, dass*** der besagte erste und der besagte zweite Verarbeitungsteil anhand der besagten Anpassungssignale bei der Initialisierung oder nach dem On-the-Fly-Prinzip angepasst werden.

5. **Kommunikationssystem** (10) nach einem beliebigen der vorstehenden Ansprüche, ***dadurch gekennzeichnet, dass*** der besagte Störimpuls-Messteil einen Löscheinrichtungs-Detektor oder einen Störenergieerhöhungs-Detektor oder einen Viterbi-Ausgangsmetrikerhöhungs-Detektor umfasst.

6. **Kommunikationssystem** (10) nach einem beliebigen der vorstehenden Ansprüche, ***dadurch gekennzeichnet, dass*** der besagte Extrapolationsteil und der besagte Anpassungsteil einen Teil einer an die besagte erste Vorrichtung gekoppelten dritten Vorrichtung (3) bilden.

7. **Kommunikationssystem** (10) nach den Ansprüchen 1, 2, 3, 4 oder 5, ***dadurch gekennzeichnet, dass*** der besagte Extrapolationsteil und der besagte Anpassungsteil einen Teil der besagten ersten Vorrichtung bilden.

8. **Erste Vorrichtung** (1) des Kommunikationssystems gemäß Anspruch 7.

9. **Verfahren** zur Verwendung in einem Kommunikationssystem, welches **eine erste Vorrichtung** (1) und **eine zweite Vorrichtung** (2) umfasst, die über ein **Übertragungsmedium** Signale austauschen, wobei die besagte erste Vorrichtung einen **ersten Verarbeitungsteil** (12) für die Verarbeitung von über das besagte Übertragungsmedium an die besagte zweite Vorrichtung zu übertragenden Signalen umfasst, und wobei die besagte zweite Vorrichtung **einen zweiten Verarbeitungsteil** (22) für die Verarbeitung von über das besagte Übertragungsmedium von der besagten ersten Vorrichtung empfangenen Signalen umfasst,
wobei das besagte Verfahren einen ersten Schritt umfasst, in welchem an der ersten Vorrichtung die Eigenschaften von Störimpulsen, welche über das besagte Übertragungsmedium von der besagten zweiten Vorrichtung empfangene Signale beeinträchtigen, gemessen werden,
***dadurch gekennzeichnet, dass*** das besagte Verfahren weiterhin einen zweiten Schritt umfasst, in welchem die Eigenschaften von Störimpulsen, welche über das besagte Übertragungsmedium an die besagte zweite Vorrichtung übertragene Signale beeinträchtigen, auf der Basis der in dem ersten Schritt ermittelten **gemessenen Störimpuls-Eigenschaften** ermittelt werden,
und einen dritten Schritt umfasst, in welchem für den besagten ersten und den besagten zweiten Verarbeitungsteil bestimmte **Anpassungssignales** ausgegeben werden, um deren Verarbeitung auf der Basis der in dem zweiten Schritt ermittelten **extrapolierten Störimpuls-Eigenschaften** anzupassen.

10. **Computerprogramm-Produkt** zum Durchführen der Schritte des Verfahrens gemäß Anspruch 9.

11. **Medium** zum Speichern des Computerprogramm-Produktes gemäß Anspruch 10.

## Revendications

1. **Système de communication** (10) comprenant **un premier dispositif** (1) et **un deuxième dispositif** (2) échangeant des signaux sur **un support de transmission,** ledit premier dispositif comprenant **une première partie de traitement** (12) pour traiter des signaux à transmettre sur ledit support de transmission audit deuxième dispositif, et ledit deuxième dispositif comprenant **une deuxième partie de traitement** (22) pour traiter des signaux reçus par l'intermédiaire dudit support de transmission à partir dudit premier dispositif,
ledit premier dispositif comprenant **une partie de mesure du bruit impulsif** (31) pour mesurer des caractéristiques de bruit impulsif affectant des signaux reçus par l'intermédiaire dudit support de transmission à partir dudit deuxième dispositif, ***caractérisé en ce que*** ledit système de communication comprend en outre **une partie d'extrapolation** (32) pour déterminer des caractéristiques de bruit impulsif affectant des signaux transmis sur ledit support de transmission audit deuxième dispositif sur la base de **caractéristiques mesurées du bruit impulsif** déterminées par ladite partie de mesure du bruit impulsif,
et une **partie de réglage** (33) pour émettre des **signaux de réglage** destinés auxdites première et deuxième parties de traitement pour régler leur traitement sur la base de **caractéristiques extrapolées du bruit impulsif** déterminées par ladite partie d'extrapolation.

2. **Système de communication** (10) selon la revendication 1, ***caractérisé en ce que*** des signaux transmis à partir dudit premier dispositif vers ledit deuxième dispositif sur ledit support de transmission et des signaux transmis à partir dudit deuxième dispositif vers ledit premier dispositif sur ledit support de transmission sont des signaux multi-porteuses et utilisent des bandes de fréquence disjointes et entrelacées.

3. **Système de communication** (10) selon l'une quelconque des revendications précédentes, ***caractérisé en ce que*** lesdites première et deuxième parties de traitement comprennent des parties entrelacées ou des parties de codage de correction d'erreurs sans voie de retour,
*et **en ce que*** lesdits signaux de réglage comprennent une protection contre le bruit impulsif minimum ou un retard de signal maximum ou un paramètre de codage.

4. **Système de communication** (10) selon l'une quelconque des revendications précédentes, ***caractérisé en ce que*** lesdites première et deuxième parties de traitement sont réglées par lesdits signaux de réglage au moment de l'initialisation ou à la volée.

5. **Système de communication** (10) selon l'une quelconque des revendications précédentes, ***caractérisé en ce que*** ladite partie de mesure du bruit impulsif comprend un détecteur d'effacement ou un détecteur d'augmentation de l'énergie sonore ou un détecteur d'augmentation de la métrique de sortie de Viterbi.

6. **Système de communication** (10) selon l'une quelconque des revendications précédentes, ***caractérisé en ce que*** lesdites parties d'extrapolation et de réglage font partie **d'un troisième dispositif** (3) couplé audit premier dispositif.

7. **Système de communication** (10) selon la revendication 1, 2, 3, 4 ou 5, ***caractérisé en ce que*** lesdites parties d'extrapolation et de réglage font partie dudit premier dispositif.

8. **Premier dispositif** (1) du système de communication selon la revendication 7.

9. **Procédé** destiné à être utilisé dans un système de communication comprenant **un premier dispositif** (1) et **un deuxième dispositif** (2) échangeant des signaux sur **un support de transmission,** ledit premier dispositif comprenant **une première partie de traitement** (12) pour traiter des signaux à transmettre sur ledit support de transmission audit deuxième dispositif, et ledit deuxième dispositif comprenant **une deuxième partie de traitement** (22) pour traiter des signaux reçus par l'intermédiaire dudit support de transmission à partir dudit premier dispositif,
ledit procédé comprenant une première étape, au niveau du premier dispositif, de mesure des caractéristiques de bruit impulsif affectant des signaux reçus par l'intermédiaire dudit support de transmission à partir dudit deuxième dispositif,
***caractérisé en ce que*** le procédé comprend en outre une deuxième étape de détermination des caractéristiques de bruit impulsif affectant des signaux transmis sur ledit support de transmission audit deuxième dispositif sur la base de **caractéristiques mesurées du bruit impulsif** déterminées par la première étape,
et une troisième étape d'émission de **signaux de réglage** destinés auxdites première et deuxième parties de traitement pour régler leur traitement sur la base de **caractéristiques extrapolées du bruit impulsif** déterminées par la deuxième étape.

10. **Produit de programme informatique** pour exécuter les étapes du procédé selon la revendication 9.

11. **Support** pour stocker le produit de programme informatique selon la revendication 10.
